# EUROPEAN PATENT APPLICATION

(11) **EP 4 718 272 A1**
(43) Date of publication of application: **01.04.2026**
(21) Application number: 24810475.4
(22) Date of filing: 23.05.2024
(51) Int. Cl.: G06F 13/42, G06F 13/38

(54) **SYNCHRONOUS SERIAL COMMUNICATION DEVICE AND METHOD**

(30) Priority: 23.05.2023 CN 202310585673
(71) Applicant: Vanchip (Tianjin) Technology Co. Ltd, Tianjin 300457 (CN)
(72) Inventor: YAN, Yuming, Tianjin 300457 (CN); ZHANG, Qihua, Tianjin 300457 (CN)
(74) Representative: Wang, Bo
(86) International application number: PCT/CN2024/095038
(87) International publication number: WO 2024/240238

(57) **Abstract**

Disclosed in the present invention are a synchronous serial communication device and method. The method comprises: an MIPI main control chip generating an MIPI instruction and sending same to an MIPI module; the MIPI module screening serial clock signals and serial data signals in real time, and recoding the screened information; sending the recoded information to all radio frequency front-end interface dies; and the radio frequency front-end interface dies decoding the recoded information, and sending the decoded data information to a follow-up module by means of an IO port. Under the same scale, compared with a traditional MIPI circuit, a logic circuit on a die for using the present invention to realize internal data communication can save 75% of area, and MIPI information can take effect synchronously at the end of an MIPI frame, such that extra information transmission time is not needed, and the working efficiency of synchronous serial communication is improved.

## Description

### BACKGROUND

### Technical Field

The present invention belongs to the field of data communication technologies, and relates to a synchronous serial communication device and a corresponding synchronous serial communication method.

### Related Art

Currently, an integration level of chips for a radio frequency front-end interface (RF FE for short) becomes increasingly high. The mobile industry processor interface (MIPI) protocols commonly used in the RF FE chip also becomes increasingly complex. In addition, at a chip design stage, in consideration of layout wiring or reuse of dies (the dies are small pieces into which a wafer is cut, on which given functional circuits are manufactured), the functional circuits may be distributed on different dies. If each die has separate functional circuits, an area and power consumption of the die may be excessively large. If signals between dies are transmitted through general-purpose input/output (GPIO) interfaces, a quantity of traces is excessively large. Therefore, a new data communication solution is needed that can transmit data signals received by dies with functional circuits to corresponding functional circuits on other dies with as few traces as possible.

### SUMMARY

The primary technical problem to be resolved in the present invention is to provide a simplified synchronous serial communication device.

Another technical problem to be resolved in the present invention is to provide a corresponding synchronous serial communication method.

To achieve the above technical objective, the present invention adopts the following technical solutions.

According to a first aspect of embodiments of the present invention, a synchronous serial communication device is provided, including a mobile industry processor interface (MIPI) main control chip, an MIPI interface module, and at least one radio frequency front-end interface (RF FE) die, wherein
the MIPI main control chip sends an MIPI command to the MIPI interface module;
the MIPI interface module receives the MIPI command, and sends, to the RF FE die, a clock signal and a data signal that are re-encoded; and
the RF FE die receives the clock signal and the data signal, and sends decoded data information to a follow-up module through an input/output (IO) port.

Preferably, when a quantity of the RF FE dies is not less than two, the RF FE dies are connected in parallel to share the clock signal and the data signal.

Preferably, the MIPI interface module is located in the separately arranged RF FE die, and includes a slave module and a re-encoding output module connected through an internal bus, and the re-encoding output module internally includes a serial clock signal control circuit and a serial data signal control circuit.

Alternatively, the re-encoding output module is located in the separately arranged RF FE die, and internally includes a serial clock signal control circuit and a serial data signal control circuit.

Preferably, the MIPI command includes a serial clock signal and a serial data signal.

The re-encoding output module re-encodes the serial clock signal through a logic circuit in the slave module, samples and screens the serial data signal, and outputs a data signal after the re-encoding.

Preferably, the RF FE die includes a serial communication decoding module and an internal register that are connected through an internal bus. The RF FE die samples and decodes the data signal through an edge of the clock signal, and then sends decoded data information to the follow-up module through an IO port of the internal register.

Preferably, the serial communication decoding module switches between an address frame receiving state and a data frame receiving state.

According to a second aspect of the embodiments of the present invention, a synchronous serial communication method is provided, which is implemented based on the foregoing synchronous serial communication device and includes the following steps.

S1: An MIPI main control chip generates an MIPI command, and sends the MIPI command to an MIPI interface module.

S2: The MIPI interface module performs real-time screening on the MIPI command, and re-encodes screened information.

S3: Send re-encoded information to all RF FE dies.

S4: Each of the RF FE dies decodes the re-encoded information, and sends decoded data information to a follow-up module through an IO port.

Preferably, the recoded data format is: X command bits + Y address bits + address parity bit + n*(Z data bits + data parity bit), where X, Y, Z, and n are all positive integers.

Preferably, the MIPI command includes a serial clock signal and a serial data signal, and the real-time screening is to retain a register address, register data, and parity bit data in the serial clock signal and the serial data signal, and remove other information.

Preferably, the re-encoding is to perform unified integration on different MIPI frames, compress register addresses and register data, and complete parity bit verification, to simplify a logical operation process of the RF FE die responsible for decoding.

Preferably, in step S4, the RF FE die synchronously extracts a register address and register data from each of the MIPI frames, and outputs the register address and the register data to other parallel-connected RF FE dies through a clock signal line and a data signal line after the re-encoding.

Preferably, a sequence start condition (SSC) signal is used as the MIPI command, a data signal is outputted at both a rising edge and a falling edge of a clock signal, and a predetermined combination of data signal values is used as a flag for state switching or enabling.

Compared with the prior art, the present invention provides a synchronous serial communication solution that effectively extracts and converts MIPI interface information through a re-encoding technology. Under the same scale, compared with a circuit using a conventional MIPI interface, a logic circuit on a die using the synchronous serial communication solution to realize internal data communication can save 75% of an area, and MIPI interface information may take effect synchronously at the end of an MIPI frame without needing additional information transmission time, thereby improving operating efficiency of synchronous serial communication.

### BRIEF DESCRIPTION OF THE DRAWINGS

FIG. 1 is a schematic structural diagram of a synchronous serial communication device according to a first embodiment of the present invention.
FIG. 2 is a schematic circuit diagram of a mobile industry processor interface (MIPI) module in an embodiment of the present invention.
FIG. 3 is a schematic circuit diagram of a radio frequency front-end interface (RF FE) die in an embodiment of the present invention.
FIG. 4 is a flowchart of a synchronous serial communication method according to a second embodiment of the present invention.
FIG. 5 is an operation flowchart of a re-encoding output module in an MIPI interface module in an embodiment of the present invention.
FIG. 6 is an operation flowchart of a serial communication decoding module in an RF FE die in an embodiment of the present invention.
FIG. 7 is a serial communication timing diagram of a conventional MIPI interface circuit in the prior art.
FIG. 8 is a simplified synchronous serial communication timing diagram in an embodiment of the present invention.

### DETAILED DESCRIPTION

Technical content of the present invention is described in detail below with reference to the accompanying drawings and specific embodiments.

### First embodiment

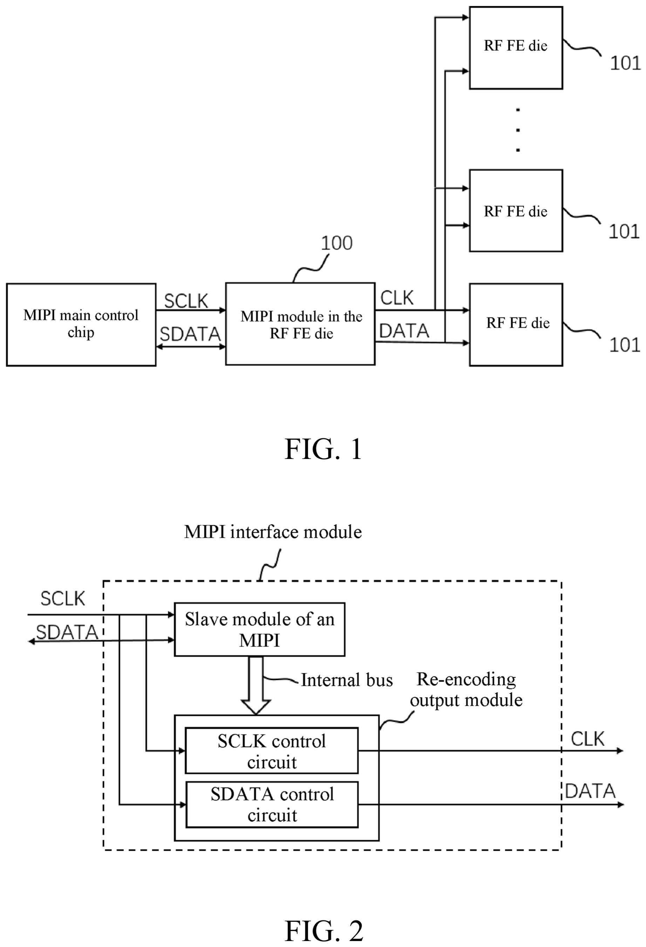

The first embodiment of the present invention provides a synchronous serial communication device, configured to resolve a problem of data information transmission between different dies in a radio frequency front-end interface (RF FE) chip. As shown in FIG. 1, the synchronous serial communication device includes a mobile industry processor interface (MIPI) main control chip, an MIPI interface module 100, and at least one RF FE die 101. The MIPI main control chip sends a serial clock signal (abbreviated as SCLK) and a serial data signal (abbreviated as SDATA) as MIPI commands to the MIPI interface module 100, and receives a serial data signal sent by the MIPI interface module 100. The MIPI interface module 100 receives the serial clock signal and the serial data signal sent by the MIPI main control chip, and sends, to the RF FE die 101 connected to the MIPI interface module, a clock signal (abbreviated as CLK) and a data signal (abbreviated as DATA) that are re-encoded. Each RF FE die 101 receives the clock signal and the data signal sent by the MIPI interface module 100, and sends decoded data information to a follow-up module through an input/output (IO) port.

It should be noted that in the synchronous serial communication device provided in the embodiment of the present invention, one or more RF FE dies 101 may be arranged. When a plurality of (not less than two) RF FE dies 101 are arranged, the RF FE dies 101 are connected in parallel to share the clock signal and the data signal sent by the MIPI interface module 100.

As shown in FIG. 2, in a first embodiment of the present invention, the MIPI interface module 100 is located in a separately arranged RF FE die, and includes a slave module and a re-encoding output module for implementing an MIPI interface. In addition, the re-encoding output module may be directly located in the separately arranged RF FE die. The re-encoding output module further includes a serial clock signal control circuit and a serial data signal control circuit inside. The serial clock signal control circuit in the MIPI interface module 100 samples and processes the serial data signal and outputs a data signal. Specifically, the MIPI interface module 100 sets the output data signal to a low level when no MIPI frames are received, outputs a sequence start condition (SSC) signal during first four bits of a received MIPI frame, subsequently outputs 8-bit cmd&address data and a 1-bit address parity bit (active-low), and then outputs n*8 bit data and n*1 bit data parity bits (active-high). n is a positive integer in a range of 1-16, and a specific value is determined by the MIPI frame.

In an embodiment of the present invention, the slave module in the MIPI interface module 100 receives the serial clock signal and the serial data signal sent by an MIPI main control chip, and is connected to the re-encoding output module through an internal bus. The serial clock signal control circuit inside the re-encoding output module receives the serial clock signal sent by the MIPI main control chip, and sends a processed clock signal. The serial data signal control circuit receives the serial data signal sent by the MIPI main control chip, and sends a processed data signal. Herein, the re-encoding output module re-encodes the serial clock signal through a logic circuit in the slave module inside the MIPI interface module 100, samples and screens the serial data signal, and outputs a required data signal after the re-encoding. The logic circuit pulls the serial clock signal low or high as needed, to ensure that the RF FE die 101 receives edge triggering of the clock signal only when needing to sample the serial data signal. This is to be further described in detail later.

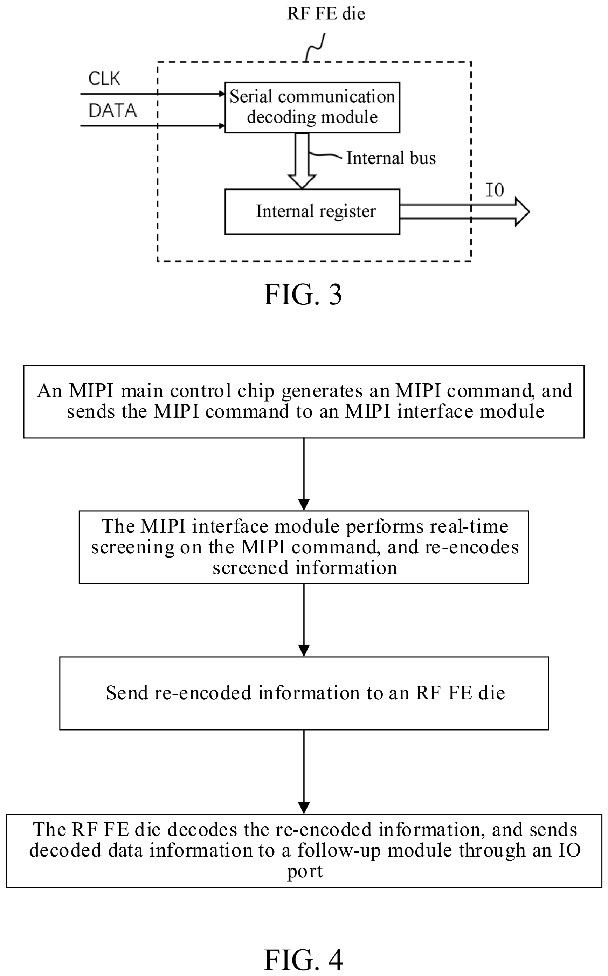

As shown in FIG. 3, in the first embodiment of the present invention, given functional circuits are manufactured on an RF FE die 101, specifically a serial communication decoding module and an internal register. The serial communication decoding module is connected to the internal register through an internal bus. A Main functions of the RF FE die 101 is to receive a clock signal and a data signal outputted by an MIPI interface module 100, sample and decode the data signal through an edge of the clock signal, and then send decoded data information to a follow-up module through an IO port of the internal register. The internal register also sends register data through the IO port.

In an embodiment of the present invention, the serial communication decoding module has two receiving states: an address frame (Address_Frame) receiving state and a data frame (Data_Frame) receiving state. The RF FE die 101 enters the address frame receiving state after receiving an MIPI command, and receives register address information in the address frame receiving state. If a first received bit after reset is high or a ninth received bit (Address parity) is low, the address frame receiving state switched to the data frame receiving state. The RF FE die 101 receives the register data in the data frame receiving state. Register address information stored in the serial communication decoding module is updated when a parity bit of an address frame is correct, and is increased by 1 every nine bits after entering the data frame receiving state. If a parity bit of a data frame is correct, register data corresponding to a register address stored at this time is updated.

### Second embodiment

A specific operating process of the foregoing synchronous serial communication device is described in detail below in conjunction with the synchronous serial communication method provided in the second embodiment.

As shown in FIG. 4, the second embodiment of the present invention provides a synchronous serial communication method, including at least the following steps.

S1: An MIPI main control chip generates an MIPI command, and sends the MIPI command to an MIPI interface module 100.

In an embodiment of the present invention, all MIPI frames start with an MIPI command. The MIPI command is a specific combination of a serial clock signal and a serial data signal. The serial clock signal remains at a low level, and a high-level pulse appears on the serial data signal.

S2: The MIPI interface module 100 performs real-time screening on the MIPI command, and re-encodes screened information.

The real-time screening is to retain a register address, register data, and parity bit data in the serial clock signal and the serial data signal, and remove other information. The re-encoding is to perform unified integration on different MIPI frames, compress register addresses and register data, and complete parity bit verification, thereby simplifying a logical operation process of an RF FE die 101 responsible for decoding.

S3: Send re-encoded information to all RF FE dies 101.

S4: Each of the RF FE dies 101 decodes the re-encoded information, and sends decoded data information to a follow-up module through an IO port.

In an embodiment of the present invention, the RF FE die 101 synchronously extracts information such as the register address and the register data in the MIPI frame, and outputs the register address and the register data to other RF FE dies 101 after the re-encoding. In this process, only two signal lines, a clock signal line and a data signal line, are used between the RF FE dies 101 connected in parallel.

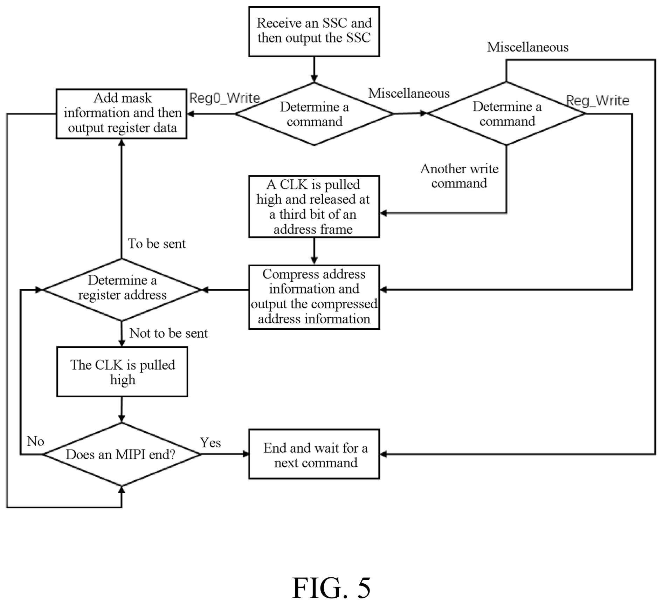

As shown in FIG. 5, in an embodiment of the present invention, step S2 specifically includes the following steps.

S21: Generate a frame reset signal to reset a state of a re-encoding output module when a slave module in the MIPI interface module receives an MIPI command. The re-encoding output module resets its own state, sets a clock signal and a data signal to a low level, and determines whether the MIPI command is an MIPI command Reg0_Write.

If so, mask information is added and register data is outputted to perform step S26, and if not, step S22 is performed.

A value of a first command bit of the MIPI command Reg0_Write is set to 1, and values of first command bits of other commands are set to 0, which functions to distinguish Reg0_Write from other commands.

The MIPI command Reg0_Write is described as follows herein. The command becomes 1 command bit + 7 data bits + 1 data parity bit after being unified. To distinguish the command from other commands, the value of the first command bit of Reg0_Write is 1, and the values of other commands are 0. If a first bit received after reset is high, a serial communication decoding module may consider that the received command is Reg0_Write. If a received ninth bit is high, low 7 bits of the register are updated.

S22: The re-encoding output module adjusts the data signal to a high level at a falling edge of a second serial clock signal, adjusts the data signal to a low level at a falling edge of a third serial clock signal, and outputs the MIPI command to the RF FE die.

During performing of step S22, the clock signal is always at a low level.

S23: The re-encoding output module starts outputting a clock signal from a falling edge of a fourth serial clock signal, and determines, based on received information at a rising edge of a seventh serial clock signal, whether next information is a register address or register data.

If not, the clock signal is adjusted to a high level, and then the clock signal is outputted until a third bit of the register address is received. If so, step S24 is performed.

S24: Compress register address information, and output the compressed register address information.

In an embodiment of the present invention, the re-encoding output module synchronously compresses received information when receiving the register address. Since a scale of a subsequent RF FE die 101 is usually not too large, the re-encoding output module may mask an unnecessary register address and compress 8-bit register address information to within 6 bits.

S25: The re-encoding output module determines, based on a current register address when receiving register data, whether a clock signal needs to be outputted.

If so, the re-encoding output module samples a serial data signal at a falling edge of a serial clock signal, and outputs a data signal. When the MIPI command is Mask_Write, an output value of the data signal is a value obtained after mask information is added and the mask operation is completed. When a Tirg value is outputted, an output value of the data signal is a value obtained after a Trig_Mask operation is completed.

In an embodiment of the present invention, mask information is added and register data is outputted to perform step S26. If not, the clock signal is set to a high level, and step S26 is performed. An output level of a data signal is set based on parity bit information of the register address. If a parity bit of the register address is correct, the output level of the data signal is set to a low level. If the parity bit of the register address is not correct, the output level of the data signal is set to a high level.

S26: Determine whether a command ends.

If so, recoded information is obtained, and a next command is awaited. If not, steps S25-S26 are repeated.

In an embodiment of the present invention, the re-encoding output module may unify MIPI commands of different types and different lengths into a format of 2 command bits + 6 address bits + 1 address parity bits + n*(8 data bits +1 data parity bit), and then re-encodes the commands and transmits the re-encoded commands to a subsequent RF FE die 101. n is a positive integer, and a specific value is determined by the MIPI frame. It should be noted that the unified format is not limited to that in the foregoing embodiment, and may also be another similar format, for example, 4 command bits + 4 address bits + 1 address parity bit + n*(16 data bits + 1 data parity bit). This is not limited in the present invention.

Compared with the prior art, in the present invention, MIPI frames of different types and different lengths are uniformly re-encoded into the format of X command bits + Y address bits + address parity bit + n*(Z data bits + data parity bit) through the re-encoding output module. This enables the RF FE chip to support the MIPI interface protocol using only clock signal lines and data signal lines without increasing data transmission time, eliminates the need for adding a crystal oscillator circuit, and significantly reduces an area of the required logic circuits on the RF FE die. In addition, the MIPI interface information takes effect synchronously at the end of the MIPI frame, without needing additional information transmission time. The signal lines for transmitting information herein include, but are not limited to, conventional signal lines such as an address line and an enable line. This is not limited in the present invention.

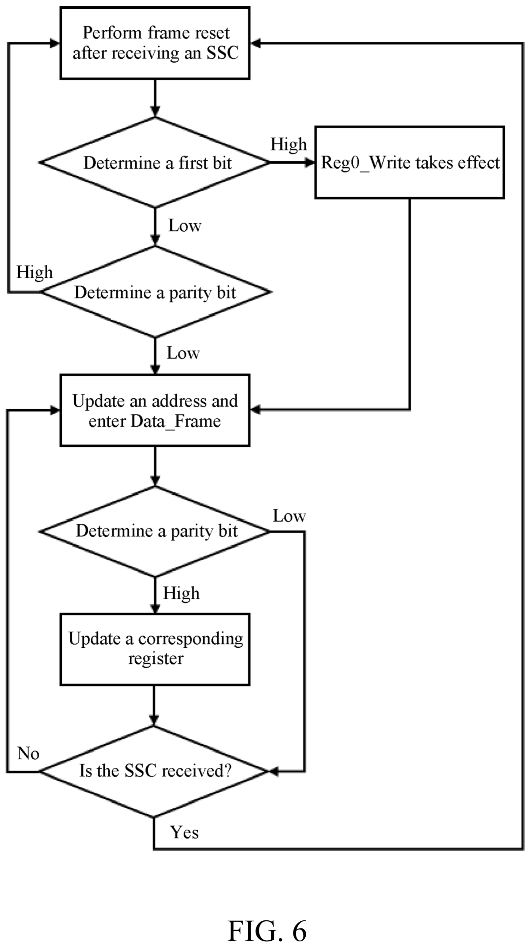

As shown in FIG. 6, in another embodiment of the present invention, step S4 further includes the following steps.

S41: A serial communication decoding module receives an MIPI command, and generates a frame reset signal to reset an internal register thereof.

S42: The serial communication decoding module samples a data signal through a rising edge of the clock signal.

S43: The serial communication decoding module determines a level value of a first bit received after the reset.

If the level value is high, an MIPI command Reg0_Write takes effect, and step S44 is performed. If the level value is low, a level value of a parity bit of a register address is determined.

If the level value of the parity bit is high, S41-S43 are repeatedly performed. If the level value of the parity bit is low, step S44 is performed.

S44: Update register address information, enter a data frame, and determine a level value of a parity bit of the data frame.

If the level value of the parity bit is high, a corresponding register is updated, and step S45 is performed. If the level value of the parity bit is low, step S45 is directly performed.

S45: Determine whether the MIPI command is received.

If so, steps S41-S45 are repeatedly performed. If not, steps S44-S45 are repeatedly performed.

In an embodiment of the present invention, an SSC signal may be used as the MIPI command, a data signal is outputted at both a rising edge and a falling edge of a clock signal, and a predetermined combination of data signal values is used as a flag for state switching or enabling, or the like. This is not limited in the present invention.

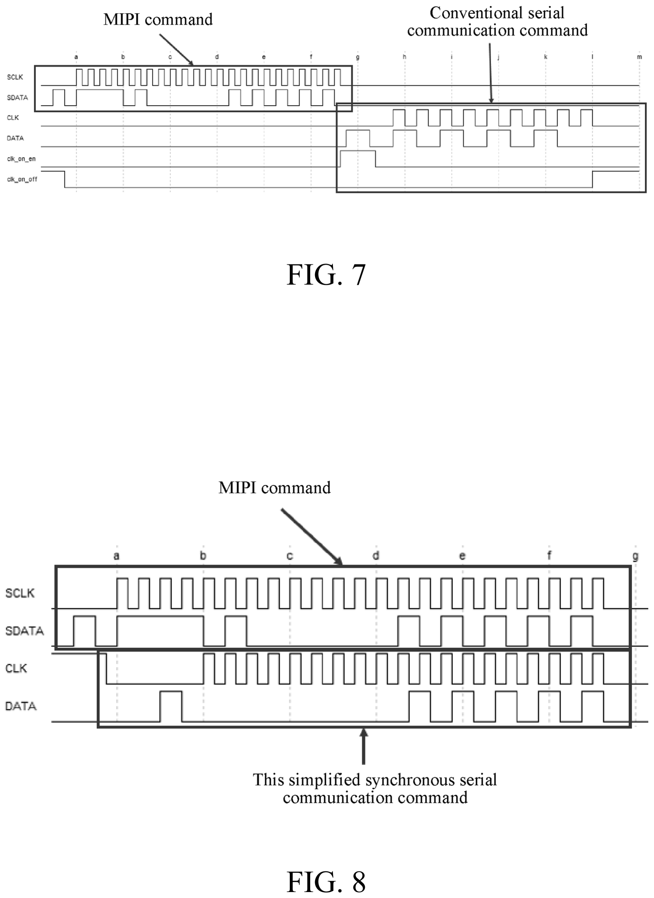

FIG. 7 is a serial communication timing diagram of a conventional MIPI interface circuit in the prior art. FIG. 8 is a simplified synchronous serial communication timing diagram in an embodiment of the present invention. It may be seen through comparison of FIG. 7 and FIG. 8 that the present invention provides a synchronous serial communication solution that effectively extracts and converts MIPI interface information through a re-encoding technology. It is confirmed through experiments that under the same scale, compared with a circuit using a conventional MIPI interface, a logic circuit on a die using the synchronous serial communication solution to realize internal data communication can save 75% of an area, and MIPI interface information may take effect synchronously at the end of an MIPI frame without needing additional information transmission time, thereby improving operating efficiency of synchronous serial communication.

It should be noted that the technical features in the foregoing embodiments may be randomly combined. For concise description, not all possible combinations of the technical features in the foregoing embodiments are described. However, provided that combinations of the technical features do not conflict with each other, the combinations of the technical features are considered to fall within the scope described in this specification.

In addition, terms "first" and "second" are used merely for the purpose of description, and cannot be understood as indicating or implying relative importance or implying a number of indicated technical features. Therefore, a feature defined with "first" or "second" may explicitly or implicitly include one or more features. In the descriptions of the present invention, the "plurality of' means two or more, unless otherwise definitely and specifically defined.

The synchronous serial communication device and method provided in the present invention are described in detail above. For a person of ordinary skill in the art, any apparent change made to the present invention without departing from the essential content of the present invention constitutes infringement of the patent right of the present invention and bears a corresponding legal responsibility.

## Claims

1. A synchronous serial communication device, comprising a mobile industry processor interface (MIPI) main control chip, an MIPI interface module, and at least one radio frequency front-end interface (RF FE) die, wherein
the MIPI main control chip sends an MIPI command to the MIPI interface module;
the MIPI interface module receives the MIPI command, and sends, to the RF FE die, a clock signal and a data signal that are re-encoded; and
the RF FE die receives the clock signal and the data signal, and sends decoded data information to a follow-up module through an input/output (IO) port.

2. The synchronous serial communication device according to claim 1, wherein
when a quantity of the RF FE dies is not less than two, the RF FE dies are connected in parallel to share the clock signal and the data signal.

3. The synchronous serial communication device according to claim 1, wherein
the MIPI interface module is located in the separately arranged RF FE die, and comprises a slave module and a re-encoding output module connected through an internal bus, and the re-encoding output module internally comprises a serial clock signal control circuit and a serial data signal control circuit.

4. The synchronous serial communication device according to claim 3, wherein
the re-encoding output module is located in the separately arranged RF FE die, and internally comprises a serial clock signal control circuit and a serial data signal control circuit.

5. The synchronous serial communication device according to claim 3 or 4, wherein
the MIPI command comprises a serial clock signal and a serial data signal; and
the re-encoding output module re-encodes the serial clock signal through a logic circuit in the slave module, samples and screens the serial data signal, and outputs a data signal after the re-encoding.

6. The synchronous serial communication device according to claim 1, wherein
the RF FE die comprises a serial communication decoding module and an internal register connected through an internal bus, and the RF FE die samples and decodes the data signal through an edge of the clock signal, and then sends decoded data information to the follow-up module through an IO port of the internal register.

7. The synchronous serial communication device according to claim 6, wherein
the serial communication decoding module switches between an address frame receiving state and a data frame receiving state.

8. A synchronous serial communication method, implemented by the synchronous serial communication device according to any one of claims 1 to 7, and comprising the following steps:
S1: generating, by an MIPI main control chip, an MIPI command, and sending the MIPI command to an MIPI interface module.
S2: performing, by the MIPI interface module, real-time screening on the MIPI command, and re-encoding screened information.
S3: sending re-encoded information to all RF FE dies; and
S4: decoding, by each of the RF FE dies, the re-encoded information, and sending decoded data information to a follow-up module through an IO port.

9. The synchronous serial communication method according to claim 8, wherein
the recoded data format is: X command bits + Y address bits + address parity bit + n*(Z data bits + data parity bit), wherein X, Y, Z, and n are all positive integers.

10. The synchronous serial communication method according to claim 9, wherein
the data format is: 2 command bits + 6 address bits + 1 address parity bit + n*(8 data bits + 1 data parity bit).

11. The synchronous serial communication method according to claim 8, wherein
the MIPI command comprises a serial clock signal and a serial data signal, and the real-time screening is to retain a register address, register data, and parity bit data in the serial clock signal and the serial data signal, and remove other information.

12. The synchronous serial communication method according to claim 8, wherein
the re-encoding is to perform unified integration on different MIPI frames, compress register addresses and register data, and complete parity bit verification, to simplify a logical operation process of the RF FE die responsible for decoding.

13. The synchronous serial communication method according to claim 11 or 12, wherein
in step S4, the RF FE die synchronously extracts a register address and register data from each of the MIPI frames, and outputs the register address and the register data to other parallel-connected RF FE dies through a clock signal line and a data signal line after the re-encoding.

14. The synchronous serial communication method according to claim 8, wherein
a sequence start condition (SSC) signal is used as the MIPI command, a data signal is outputted at both a rising edge and a falling edge of a clock signal, and a predetermined combination of data signal values is used as a flag for state switching or enabling.
